# EUROPEAN PATENT SPECIFICATION

(11) **EP 2 250 879 B1**
(45) Date of publication and mention of the grant of the patent: **03.04.2013**
(21) Application number: 10075376.3
(22) Date of filing: 24.11.2004
(51) Int. Cl.: A01K 1/12, A01K 1/00, A01K 1/02

(54) **An assembly for and a method of managing a herd of animals moving about freely**
Einrichtung und Verfahren zur Verwaltung einer Herde von frei herumlaufenden Tieren
Système et procédé de conduite d'un troupeau d'animaux non attachés

(30) Priority: 12.12.2003 NL 1024997
(43) Date of publication of application: 17.11.2010
(62) Divisional of application: 09075186.8
(73) Proprietor: Lely Enterprises AG, 6300 Zug (CH)
(72) Inventor: Van den Berg, Karel, 3147 PA Maassluis (NL)
(74) Representative: Corten, Maurice Jean F.M.

(56) References cited:
- WO-A-03/030629
- US-B1- 6 622 651

## Description

The invention relates to an assembly for managing a herd of animals moving about freely according to the preamble of claim 1, see also document US-B-6622651.

An assembly is known from WO 96/19916 wherein the control unit controls the gate in such a way that, when it has been found, for example, that an animal has not been milked, the animal is led from the enclosed area to a separation area. In said separation area the animal can then be milked manually. Although this known assembly functions properly, the number of times a farmer has to go to the separation area to milk an animal manually is found to be relatively large, taking up an unnecessarily large part of his time. This may also have an adverse effect on the number of times an animal can be milked per day, resulting in a reduced milk production.

The invention aims inter alia at providing an improved assembly for managing a herd of animals moving about freely.

To this end, the invention relates to an assembly for managing a herd of animals moving about freely, which assembly is provided with an animal receiving area surrounded by an enclosure, the enclosure being provided with a gate, with a feeding device arranged in the surrounded area for automatically supplying feed to an animal, with an animal recognition system for determining the identity of an animal and for emitting an animal recognition signal, and with a control unit for controlling the functioning of the gate with the aid of the animal recognition signal, **characterized in that** the feeding device is provided with a feed measuring device for detecting whether an animal has eaten and for emitting an eating signal, and in that the control unit is suitable for opening the gate, in order that an animal can leave the surrounded area only when the eating signal indicates that the animal has eaten. In particular if the feed supplied is concentrate or the like, this provides the possibility to ensure that the animal leaves the surrounded area only when she has consumed feed.

In a preferred embodiment of an assembly according to the invention, the feed measuring device is suitable for determining the amount of feed consumed by an animal, and the control unit is suitable for opening the gate, in order that an animal can leave the surrounded area only when the amount of feed consumed is larger than or equal to a threshold amount. This provides the possibility to ensure that an animal consumes a sufficient amount of feed before leaving the surrounded area.

The threshold amount is in particular animal-dependent, so that it is possible to take individual animal feeding into account.

According to the invention, the feeding device is provided with a feed measuring device for detecting whether an animal has eaten and for emitting an eating signal, and the control unit is suitable for opening the gate, in order that an animal can leave the surrounded area when also the eating signal indicates that the animal has eaten.

In a preferred embodiment of an assembly according to the invention, the assembly is provided with a surrounded resting area with cubicles, the gate being located between the surrounded area and the surrounded resting area for the purpose of providing an animal access to the resting area.

The assembly is preferably provided with a one-way gate for providing access to the surrounded area from the resting area, the one-way gate providing in particular free access to the surrounded area for all the animals.

The invention further relates to a method of managing a herd of animals moving about freely, the method comprising the step of receiving animals in an area surrounded by an enclosure, which enclosure is provided with a gate, the step of automatically supplying feed to an animal by means of a feeding device arranged in the surrounded area, the step of determining the identity of an animal, and the step of controlling the functioning of the gate with the aid of the animal recognition signal, **characterized in that** the step of controlling the functioning of the gate comprises the opening of the gate, in order that an animal can leave the surrounded area only when the animal has eaten.

Preferred embodiments of a method according to the invention are described in the relevant sub-claims.

The invention will be elucidated hereinafter with reference to an exemplary embodiment shown in the figure.

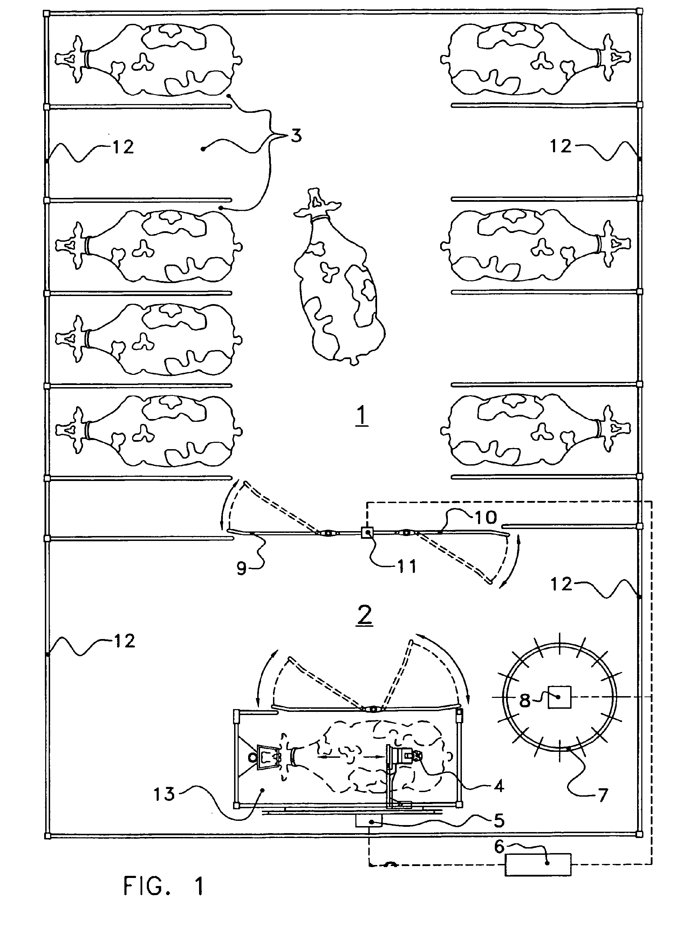

Figure 1 is a schematic plan view of an assembly according to the invention. The assembly constitutes part of a farm comprising a first area 1 for containing a herd of animals. Said first area may be a surrounded area comprising inter alia a number of cubicles 3. The first area may also comprise a pasture where the herd is allowed to move about freely.

The farm further comprises an area 2 surrounded by an enclosure 12, which area 2 is always accessible, via a one-way gate 9, for animals present in the first area 1. The enclosure 12 is further provided with a gate 10 capable of being operated by a control unit 11, which control unit 11 comprises an animal recognition unit constituting part of an animal recognition system, through which gate 10 animals can reach the first area 1 from the surrounded area 2. It is pointed out that, although the figure shows two one-way gates, any other number of gates is applicable within the invention, the arrangement being such that at any rate the gate providing animals access to the first area 1 from the surrounded area 2 is capable of being operated with the aid of animal recognition data. Therefore, it is also possible that there is only one gate providing access to the surrounded area 2 at all times and providing exit from the surrounded area only in a controlled manner.

In the surrounded area 2 there is arranged a milking station 13 that is provided with connection means 4 for automatically connecting a teat cup to a teat of an animal. There is provided a milking device 5 comprising an animal recognition unit for detecting whether an animal has been milked. Said milking device 5 emits a milking signal to a central control unit 6, which milking signal is indicative of the fact whether or not an animal has been milked.

In the surrounded area 2 there is arranged a feeding device 7, controlled by a control unit 8, for automatically supplying feed to an animal. Said feeding device 7 is located remotely from the milking station 13. The control unit 8 also comprises an animal recognition unit for determining the identity of an animal.

The animal recognition units, which may alternatively be arranged separately from the control units, emit an animal recognition signal to the central control unit 6. In order to determine which animals are present in the surrounded area 2, it is possible also to place an animal recognition unit near the gate 9.

The control unit 11 opens the gate 10 with the aid of signals received from the central control unit 6, in order that an animal can leave the surrounded area 2 only when the milking signal indicates that the animal in question has been milked. When an animal that has not yet been milked is located in the vicinity of the gate 10, the gate is not opened and the animal will have to stay in the surrounded area until she has been milked.

The milking device 5 may also be suitable for determining the number of times an animal has successively entered the milking station 13 without a successful milking has been achieved. The milking device 5 emits a sum signal to the central control unit 6, which sum signal is indicative of that number. The central control unit 6 emits a warning signal when said sum signal indicates that the number of times is larger than a particular threshold number. Said warning signal is sent, for example by telephone or by internet, for example to the farmer who is then able to visit the cow in question. It is pointed out here that the animal remains in the surrounded area 2.

The control unit 8 of the feeding device 7 is provided with a feed measuring device known per se (non-shown), such as a weighing device, for detecting whether an animal has eaten. The control unit 8 emits an eating signal to the central control unit 6, which eating signal is indicative of the fact whether or not an animal has eaten. The central control unit 6 controls the control unit 11 for opening the gate 10 in order that an animal can leave the surrounded area 2 only when the eating signal indicates that the animal has eaten. It is pointed out here that, according to one aspect of the invention, the control unit 11 opens the gate 10 only when the eating signal indicates that an animal has eaten, irrespective of whether or not the milking signal indicates that an animal has been milked. It is further pointed out that, within the scope of the invention, by opening the gate is also meant that a gate is unlocked in order that an animal can open the gate herself by pushing.

With the aid of data from the milking device 5, it is possible for the central control unit 6 to determine, additionally, the time elapsed since the milking of the animal. The opening of the gate 10, in order to enable an animal to leave the surrounded area 2, takes place only when the time elapsed is longer than or equal to a threshold time. By properly selecting the threshold time, for example in the order of 30 minutes, it will be possible for the teat openings, the so-called teat orifices, of the animal to close before the animal can leave the surrounded area via the gate 10. The threshold time can be adjusted animal-dependently, so that it is possible, for example, to take into account the period of time, varying per animal, within which the teat orifices will close.

With the aid of the feed measuring device, it is possible for the control unit 8 to determine, additionally, an amount of feed consumed by an animal, and to emit a corresponding signal to the central control unit 6. Under the control of the central control unit 6, the control unit 11 opens the gate 10, in order that an animal can leave the surrounded area only when the amount of feed consumed is larger than or equal to a threshold amount. The threshold amount is in particular animal-dependent. In this manner an animal can leave the surrounded area 2 only when the animal has consumed sufficient feed, for example concentrate. This is in particular important if the animals are grazing in the pasture, during which the total amount of feed consumed by an animal is difficult to determine and it is uncertain whether an animal has consumed an amount of feed necessary for the milk production.

Although the invention has been described in the foregoing with reference to milking and feeding of an animal, it will be obvious that the invention is also applicable to other treatments performed on an animal in the surrounded area, such as leg treatment, administration of medicine, weighing of an animal, and the like. Moreover, it is pointed out that, within the scope of the invention, by supplying feed to an animal is also meant supplying liquid to an animal.

## Claims

1. An assembly for managing a herd of animals moving about freely, which assembly is provided with an animal receiving area surrounded by an enclosure, the enclosure being provided with a gate, with a feeding device arranged in the surrounded area for automatically supplying feed to an animal, with an animal recognition system for determining the identity of an animal and for emitting an animal recognition signal, and with a control unit for controlling the functioning of the gate with the aid of the animal recognition signal, wherein the feeding device is provided with a feed measuring device for detecting whether an animal has eaten and for emitting an eating signal, **characterized in that in that** the control unit is suitable for opening the gate, in order that an animal can leave the surrounded area only when the eating signal indicates that the animal has eaten.

2. An assembly as claimed in claim 1, **characterized in that** the feed measuring device is suitable for determining the amount of feed consumed by an animal, and **in that** the control unit is suitable for opening the gate, in order that an animal can leave the surrounded area only when the amount of feed consumed is larger than or equal to a threshold amount.

3. An assembly as claimed in claim 2, **characterized in that** the threshold amount is animal-dependent.

4. An assembly as claimed in any one of the preceding claims, **characterized in that** the assembly is provided with a surrounded resting area with cubicles, the gate being located between the surrounded area and the surrounded resting area for the purpose of providing an animal access to the resting area.

5. An assembly as claimed in claim 4, **characterized in that** the assembly is provided with a one-way gate for providing access to the surrounded area from the resting area.

6. A method of managing a herd of animals moving about freely, the method comprising the step of receiving animals in an area surrounded by an enclosure, which enclosure is provided with a gate, the step of automatically supplying feed to an animal by means of a feeding device arranged in the surrounded area, the step of determining the identity of an animal, and the step of controlling the functioning of the gate with the aid of the animal recognition signal, **characterized in that** the step of controlling the functioning of the gate comprises the opening of the gate, in order that an animal can leave the surrounded area only when the animal has eaten.

7. A method as claimed in claim 6, **characterized in that** the method comprises the step of determining the amount of feed consumed by an animal, the gate being opened only when it is established that the amount of feed consumed is larger than or equal to a threshold amount.

8. A method as claimed in claim 7, **characterized in that** the threshold amount is set animal-dependently.

9. A method as claimed in any one of claims 6 to 8, **characterized in that**, by opening the gate, the animal is provided access to a resting area comprising cubicles.

## Patentansprüche

1. Einrichtung zum Verwalten einer Herde frei laufender Tiere, wobei die Einrichtung einen Tierempfangsbereich umfasst, der von einer Einfriedung umschlossen ist, wobei die Einfriedung mit einem Tor versehen ist, mit einer Fütterungsvorrichtung, die im umschlossenen Bereich zum automatischen Zuführen von Futter für ein Tier angeordnet ist, mit einem Tieridentifizierungssystem zum Bestimmen der Identität eines Tieres und zum Ausgeben eines Tiererkennungssignals und mit einer Steuereinheit zum Steuern der Funktion des Tores mit Hilfe des Tieridentifizierungssignals, wobei die Fütterungsvorrichtung mit einer Futtermessvorrichtung zum Erfassen, ob ein Tier gefressen hat, und zum Ausgeben eines Fresssignals ausgestattet ist,
**dadurch gekennzeichnet, dass** die Steuereinheit geeignet ist, das Tor zu öffnen, damit ein Tier den umschlossenen Bereich nur verlassen kann, wenn das Fresssignal anzeigt, dass das Tier gefressen hat.

2. Einrichtung nach Anspruch 1,
**dadurch gekennzeichnet, dass** die Futtermessvorrichtung zum Bestimmen der von einem Tier gefressenen Futtermenge geeignet ist, und dass die Steuereinheit zum Öffnen des Tores geeignet ist, damit ein Tier den umschlossenen Bereich nur dann verlassen kann, wenn die gefressene Futtermenge größer als oder gleich einem Schwellwert ist.

3. Einrichtung nach Anspruch 2,
**dadurch gekennzeichnet, dass** der Schwellwert tierabhängig ist.

4. Einrichtung nach einem der vorhergehenden Ansprüche,
**dadurch gekennzeichnet, dass** die Einrichtung mit einem umschlossenen Ruhebereich mit Einstellboxen ausgestattet ist, wobei das Tor zwischen dem umschlossenen Bereich und dem umschlossenen Ruhebereich angeordnet ist, um einem Tier Zugang zum Ruhebereich zu gewähren.

5. Einrichtung nach Anspruch 4,
**dadurch gekennzeichnet, dass** die Einrichtung mit einem Einwegtor ausgestattet ist, um Zugang zum umschlossenen Bereich vom Ruhebereich zu gewähren.

6. Verfahren zum Verwalten einer Herde frei laufender Tiere, wobei das Verfahren folgende Schritte umfasst: Aufnehmen von Tieren in einem von einer Einfriedung umschlossenen Bereich, wobei die Einfriedung mit einem Tor ausgestattet ist, automatisches Versorgen eines Tieres mit Futter mittels einer im umschlossenen Bereich angeordneten Fütterungsvorrichtung, Bestimmen der Identität eines Tieres und Steuern der Funktion des Tors mit Hilfe des Tieridentifizierungssignals, **dadurch gekennzeichnet, dass** der Schritt des Steuerns der Funktion des Tors das Öffnen des Tors umfasst, damit ein Tier den umschlossenen Bereich nur dann verlassen kann, wenn das Tier gefressen hat.

7. Verfahren nach Anspruch 6,
**dadurch gekennzeichnet, dass** das Verfahren den Schritt des Bestimmens der von einem Tier verzehrten Futtermenge umfasst, wobei die Tür nur geöffnet wird, wenn festgestellt ist, dass die verzehrte Futtermenge größer als oder gleich einem Schwellwert ist.

8. Verfahren nach Anspruch 7,
**dadurch gekennzeichnet, dass** der Schwellwert tierabhängig eingestellt ist.

9. Verfahren nach einem der Ansprüche 6 bis 8,
**dadurch gekennzeichnet, dass** durch Öffnen des Tors dem Tier Zugang zu einem Ruhebereich, welcher Einstellboxen umfasst, gewährt wird.

## Revendications

1. Ensemble pour gérer un troupeau d'animaux se déplaçant librement, lequel ensemble est pourvu d'une zone de réception d'animal entourée par un enclos, l'enclos étant pourvu d'une barrière, d'un dispositif d'affouragement agencé dans la zone entourée pour fournir automatiquement un fourrage à un animal, d'un système de reconnaissance d'animal pour déterminer l'identité d'un animal et pour émettre un signal de reconnaissance d'animal, et d'une unité de commande pour commander le fonctionnement de la barrière à l'aide du signal de reconnaissance d'animal, dans lequel le dispositif d'affouragement est pourvu d'un dispositif de mesure de fourrage pour détecter si un animal a mangé et pour émettre un signal de consommation, **caractérisé en ce que** l'unité de commande est appropriée pour ouvrir la barrière, afin qu'un animal puisse quitter la zone entourée seulement lorsque le signal de consommation indique que l'animal a mangé.

2. Ensemble selon la revendication 1, **caractérisé en ce que** le dispositif de mesure de fourrage est approprié pour déterminer la quantité de fourrage consommée par un animal, et **en ce que** l'unité de commande est appropriée pour ouvrir la barrière, afin qu'un animal puisse quitter la zone entourée seulement lorsque la quantité de fourrage consommée est supérieure ou égale à une quantité seuil.

3. Ensemble selon la revendication 2, **caractérisé en ce que** la quantité seuil dépend de l'animal.

4. Ensemble selon l'une quelconque des revendications précédentes, **caractérisé en ce que** l'ensemble est pourvu d'une zone de repos entourée par des boxes, la barrière étant positionnée entre la zone entourée et la zone de repos entourée dans le but de fournir à un animal un accès à la zone de repos.

5. Ensemble selon la revendication 4, **caractérisé en ce que** l'ensemble est pourvu d'une barrière unidirectionnelle pour fournir un accès à la zone entourée à partir de la zone de repos.

6. Procédé de gestion d'un troupeau d'animaux se déplaçant librement, le procédé comprenant l'étape de réception d'animaux dans une zone entourée par un enclos, lequel enclos est pourvu d'une barrière, l'étape de fourniture automatique de fourrage à un animal au moyen d'un dispositif d'affouragement agencé dans la zone entourée, l'étape de détermination de l'identité d'un animal, et l'étape de commande du fonctionnement de la barrière à l'aide du signal de reconnaissance d'animal, **caractérisé en ce que** l'étape de commande du fonctionnement de la barrière comprend l'ouverture de la barrière, afin qu'un animal puisse quitter la zone entourée seulement lorsque l'animal a mangé.

7. Procédé selon la revendication 6, **caractérisé en ce que** le procédé comprend l'étape de détermination de la quantité de fourrage consommée par un animal, la barrière étant ouverte seulement lorsqu'il a été établi que la quantité de fourrage consommée est supérieure ou égale à une quantité seuil.

8. Procédé selon la revendication 7, **caractérisé en ce que** la quantité seuil est réglée en dépendance avec l'animal.

9. Procédé selon une quelconque des revendications 6 à 8, **caractérisé en ce que**, en ouvrant la barrière, un accès à une zone de repos comprenant des boxes est fourni à l'animal.
